# EUROPÄISCHE PATENTSCHRIFT

(11) **EP 4 281 245 B1**
(45) Veröffentlichungstag und Bekanntmachung des Hinweises auf die Patenterteilung: **09.12.2026**
(21) Anmeldenummer: 21810526.0
(22) Anmeldetag: 22.10.2021
(51) Int. Cl.: B23P 15/00, B23P 11/00, F16C 33/20

(54) **LAGERKÖRPER FÜR EIN GLEITLAGER UND VERFAHREN ZUR HERSTELLUNG EINES LAGERKÖRPERS**
BEARING BODY FOR A SLIDING BEARING AND METHOD FOR PRODUCING A BEARING BODY
CORPS DE PALIER POUR PALIER LISSE ET PROCÉDÉ DE FABRICATION D'UN CORPS DE PALIER

(30) Priorität: 20.01.2021 DE 102021101097
(43) Veröffentlichungstag der Anmeldung: 29.11.2023
(73) Patentinhaber: Schaeffler Technologies AG & Co. KG, 91074 Herzogenaurach (DE)
(72) Erfinder: HENTSCHKE, Christoph, 97424 Schweinfurt (DE)
(74) Vertreter: Schaeffler Technologies
(86) Internationale Anmeldenummer: PCT/DE2021/100850
(87) Internationale Veröffentlichungsnummer: WO 2022/156838

(56) Entgegenhaltungen:
- EP-A1- 1 854 903
- DE-A1- 102007 023 418
- DE-A1- 102012 014 114
- DE-A1- 102016 110 858
- DE-A1- 102017 119 728
- DE-A1- 102019 101 969
- US-B1- 6 280 090

## Beschreibung

Die Erfindung betrifft ein nach dem Oberbegriff des Anspruchs 1 gestaltetes Verfahren zur Herstellung eines Lagerkörpers für ein Gleitlager. Ferner betrifft die Erfindung einen für die Verwendung in einem Gleitlager vorgesehenen metallischen Lagerkörper. Mikrostrukturierte Oberflächen bei mechanischen Lagern werden beispielsweise in US 6 280 090 B1 beschrieben. Die dort angeführten Mikrostrukturen können unter anderem quaderförmig ausgeprägt sein. Sie nehmen einen vorgegebenen Anteil der Gesamtoberfläche ein und befinden sich innerhalb festgelegter Abmessungsbereiche. Ziel der Strukturierung ist hierbei insbesondere eine Beeinflussung der Wärmeleitung und der Schmiereigenschaften der Lager.

JP 2015-16596 A umfasst eine Verbundstruktur aus Kunststoff und Metall sowie deren Herstellung. Zur Erhöhung der Anbindung beider Komponenten sowie zur Unterbindung von Anisotropie in der Haftfestigkeit werden Aussparungen in den metallischen Verbundpartner eingebracht. Diese unterliegen definierten Vorgaben hinsichtlich beispielsweise ihres Eintrittswinkels zur Oberfläche, ihrer Abmessung und ihres Gesamtvolumenanteils im Verhältnis zur Verbundoberfläche.

In DE 133 883 A werden Lagerschalen, bzw. Platten dargestellt, die zur Erhöhung ihrer Widerstandsfähigkeit ein Gerippe aus härteren Stoffen wie Stahl oder Eisen aufweisen und mit einem Weichmetall in fester Verbindung stehen. Dabei kann das Gerippe nach außen an den Stützflächen hervortreten und durch Abschmelzen des Weichmetalls wiederverwendet werden.

Ein gattungsgemäßes Verfahren zur Herstellung eines Lagerkörpers einer Gleitlageranordnung gemäß dem Oberbegriff von Anspruch 1 sowie ein gattungsgemäßer metallischer Lagerkörper für ein Gleitlager gemäß dem Oberbegriff von Anspruch 6 sind beispielsweise aus der DE 10 2019 101 969 A1 bekannt. Im Rahmen dieses bekannten Verfahrens werden in eine Oberfläche eines Grundkörpers, aus welchem der Lagerkörper gefertigt wird, zunächst mehrere sich kreuzende Nuten eingebracht, so dass stabartige Vorsprünge zwischen den Nuten stehen bleiben. In einem weiteren in der DE 10 2019 101 969 A1 im Detail beschriebenen Verfahrensschritt werden die Vorsprünge derart umgeformt, dass ein Muster aus hinterschneidungsartigen Geometrien ausgebildet wird. Die Hinterschneidungen sollen dazu dienen, einen Gleitlagerwerkstoff, bei welchem es sich um einen thermoplastischen Kunststoff handeln kann, formschlüssig auf dem Grundkörper zu verankern.

Ein weiteres Verfahren, mit welchem eine Haftverbesserung zwischen einer metallischen Oberfläche und einer hierauf thermisch aufgespritzten oder aufgegossenen Schicht erreicht werden soll, ist in der DE 10 2012 014 114 A1 offenbart. In diesem Fall wird die Oberfläche eines metallischen Werkstücks durch Drahterodieren bearbeitet, womit Hinterschnitte erzeugt werden. Alternativ kann Räumen als materialabtragende Behandlung eingesetzt werden. Das Verfahren nach der DE 10 2012 014 114 A1soll insbesondere zur Bearbeitung eines Pleuels geeignet sein.

Die DE 10 2009 002 529 A1 beschreibt ein Verfahren zur Bearbeitung von Komponenten einer Einspritzpumpe für eine Verbrennungskraftmaschine. Ein rotierendes Teil ist in einem Gleitlager der Einspritzpumpe aufgenommen, wobei das Gleitlager aus seiner dem rotierenden Teil zugewandten Oberfläche mit einer Zerklüftung versehen ist, in welcher eine das rotierende Teil berührende Gleitschicht aus PTFE oder PEEK verankert ist. Zur Erzeugung der Zerklüftung wird eine Laserbehandlung vorgeschlagen. Die Zerklüftung kann einander durchschneidende Rillen umfassen. Eintiefungen, welche durch die Zerklüftung gegeben sind, können in verschiedenen Teilbereichen der Oberfläche eine voneinander abweichende Tiefe und/oder Breite haben.

Ein in der DE 10 2017 119 728 A1 offenbartes Verfahren zur Herstellung eines Gleitlagers sieht das Aufbringen einer Zwischenschicht aus einem metallischen Werkstoff auf einen Lagergrundkörper über selektives Laserschmelzen vor, wobei auch der Lagergrundkörper selbst mittels selektivem Laserschmelzen hergestellt sein kann. Die Zwischenschicht kann als Hinterschneidungen ausgebildete Konturen, welche schwalbenschwanzartig geformt sind, zur Verzahnung mit einer Gleitschicht aus einem nicht-metallischen Werkstoff aufweisen. Die Gleitschicht wird durch Aufschmelzen oder Einschmelzen auf die Zwischenschicht aufgebracht.

In der DE 10 2016 110 858 A1 ist ein Gleitlager beschrieben, welches einen Lagergrundkörper aus einem metallischen Werkstoff und eine ebenfalls aus einem metallischen Werkstoff bestehende Zwischenschicht umfasst, wobei sich auf der Zwischenschicht eine Gleitlagerschicht aus einem nicht-metallischen Werkstoff, beispielsweise PEEK, befindet. Bei der Zwischenschicht handelt es sich um eine Anordnung aus Drähten oder um ein Lochblech oder um offenzelligen Metallschaum. Im Fall einer Zwischenschicht aus Drähten kann diese aus unterschiedlichen Werkstoffen, beispielsweise aus Edelstahl und Kupfer, gebildet sein.

Ein in der US 6,498,127 B1 beschriebenes Gleitlagerelement umfasst einen Grundkörper aus Metall und eine auf dessen Oberfläche befindliche poröse Sinterschicht aus einer Kupferlegierung. Die Sinterschicht ist mit einem nichtmetallischen Gleitlagerwerkstoff imprägniert und aus Teilchen mit einer mittleren Größe von 25 µm bis 100 µm gebildet, wobei die Schichtdicke der Sinterschicht nicht mehr als das Vierfache der Dicke einer Lage der Buntmetallteilchen beträgt. Als Gleitlagerwerkstoff wird unter anderem Polyimid vorgeschlagen.

Die RU 112 303 U1 offenbart ein aus einem Innenring und einem Außenring aufgebautes Gleitlager, zu dessen unter anderem Herstellung ein gewobenes Material aus PTFE-Fasern verwendet wird.

Der Erfindung liegt die Aufgabe zugrunde, die mechanisch beanspruchte Verbindung zwischen einem metallischen Lagerkörper und einem Gleitbelag eines Gleitlagers gegenüber dem genannten Stand der Technik weiterzuentwickeln, wobei ein günstiges Verhältnis zwischen langfristig möglichst auch unter wechselnden Belastungen gleichbleibenden Produkteigenschaften und Herstellungsaufwand angestrebt wird.

Diese Aufgabe wird erfindungsgemäß gelöst durch ein Verfahren zur Herstellung eines Lagerkörpers gemäß Anspruch 1. Ebenso wird die Aufgabe gelöst durch einen für die Verwendung in einem Gleitlager vorgesehenen metallischen Lagerkörper mit den Merkmalen des Anspruchs 6. Im Folgenden im Zusammenhang mit dem Lagerkörper erläuterte Ausgestaltungen und Vorteile der Erfindung gelten sinngemäß auch für das Herstellungsverfahren und umgekehrt.

Das Verfahren zur Herstellung eines Lagerkörpers für ein Gleitlager geht in an sich bekannter Grundkonzeption von der Bereitstellung eines metallischen Grundkörpers aus, dessen Oberfläche derart bearbeitet wird, dass sich stabartige Vorsprünge, das heißt Zapfen, auf der Oberfläche bilden. Der Begriff "Zapfen" wird im vorliegenden Fall unabhängig von dem Längen/Durchmesser-Verhältnis der Vorsprünge verwendet. Durch die weitere Bearbeitung des Grundkörpers werden in jedem Fall Formschlusskonturen eines jeden Vorsprungs erzeugt, welche zur formschlüssigen Halterung eines nichtmetallischen Gleitbelags geeignet sind. Bei den Formschlusskonturen handelt es sich zumindest teilweise um Öffnungen oder Bohrungen, welche die Vorsprünge in deren Querrichtung durchziehen.

Die Begriffe "Durchgangsbohrung" und "Sacklochbohrung" sind hier so zu verstehen, dass es sich generell um eine Durchgangsöffnung beziehungsweise Sacklochöffnung handelt, die lediglich vorzugsweise durch Bohren gebildet ist. Darunter fallen ein Bohren, insbesondere Laserbohren, ein Fräsen, ein Drehen und ein Bohrerodieren. Aber auch andere Verfahren zur Ausbildung einer Durchgangsöffnung oder einer Sacklochöffnung, wie beispielsweise ein Ätzen, sollen hier zur Bildung einer Durchgangsbohrung beziehungsweise Sacklochbohrung umfasst sein.

Mit den Durchgangsbohrungen, deren Hauptrichtung parallel zur Oberfläche des Grundkörpers ausgerichtet ist, ist der Effekt eines auf der Oberfläche festgewobenen Gleitbelags erzielbar, ohne dass dieser tatsächlich aus einzelnen, durch Weben mit dem Grundkörper verflochtenen Fasern aufgebaut ist.

Was die Herstellung der stabartigen Vorsprünge betrifft, sind verschiedene an sich bekannte Fertigungsverfahren einsetzbar. Insbesondere können die Vorsprünge durch Zerspanung erzeugt werden. In rationeller Weise kann dies beispielsweise geschehen, indem sich kreuzende Nuten auf der Oberfläche des Grundkörpers erzeugt werden. Ebenso können, abhängig auch vom Werkstoff des Grundkörpers, Verfahren wie Ätzen, Erodieren, oder auch ein Laserabtrag zum Einsatz kommen. Auch eine unmittelbare Erzeugung der stabartigen Vorsprünge im Rahmen eines Urformens, beispielsweise Gießens, des Grundkörpers ist prinzipiell möglich. In allen Fällen sind die stabartigen Vorsprünge in geometrisch definierter Weise auf der Oberfläche des Grundkörpers angeordnet. Insbesondere bilden die Vorsprünge ein gleichmäßiges geometrisches Muster auf der Oberfläche des Grundkörpers aus. Es können aber alternativ, beispielsweise an mechanisch stärker beanspruchen Stellen des Lagerkörpers, auch lokal eine größere Anzahl an Vorsprüngen vorgesehen sein, um die Verankerung des Gleitbelags am Grundkörper in diesem Bereich noch zu verbessern.

Die einzelnen Zapfen haben insbesondere einen polygonförmigen, beispielsweise einen quadratischen oder sechseckigen, Querschnitt. Aber auch runde, ovale oder dreieckige Querschnitte sind realisierbar.

Die stabartigen Vorsprünge oder Zapfen weisen in den drei Raumdimensionen jeweils bevorzugt eine minimale Abmessung von 0,5 mm auf. Weiterhin weisen die stabartigen Vorsprünge oder Zapfen in den drei Raumdimensionen jeweils bevorzugt eine maximale Abmessung von 5 mm auf. So kann ein stabartiger Vorsprung oder Zapfen (Breite B x Länge L x Höhe H) beispielsweise B x L x H =1 mm x 1 mm x 1 mm oder 1 mm x 2 mm x 0,5 mm dimensioniert sein. Die Abmessungen der Zapfen in den drei Raumrichtungen können sich ähneln oder auch stark voneinander abweichen. Die Geometrie der stabartigen Vorsprünge kann demnach sowohl beispielsweise einem Würfel gleichen oder auch einem länglichen Quader, welcher wie ein Steg aus dem Grundkörper hervorragt.

In jedem einzelnen stabartigen Vorsprung können, insbesondere durch Laserabtrag, mehrere Öffnungen erzeugt werden, die nach Abschluss der Bearbeitung miteinander verbunden sind. Hierbei erfolgt die Bearbeitung von verschiedenen Seiten des stabartigen Vorsprungs aus derart, dass benachbarte stabartige Vorsprünge nicht in Mitleidenschaft gezogen werden. Dies gilt für eine spanende Bearbeitung oder Ätzung in gleicher Weise wie für eine Bearbeitung per Laser. Im Fall einer Laserbearbeitung kann ein Laserstrahl in aufeinanderfolgenden Bearbeitungsschritten derart auf den stabartigen Vorsprung gerichtet werden, dass er den stabartigen Vorsprung in unterschiedlichen Winkeln, jeweils bezogen auf die Längsrichtung des stabartigen Vorsprungs trifft.

Insbesondere kann der Laserstrahl in einem der Bearbeitungsschritte in Längsrichtung des stabartigen Vorsprungs, das heißt in Normalrichtung zur Oberfläche des Lagerkörpers, ausgerichtet sein, wogegen der Laserstrahl in einem anderen Bearbeitungsschritt schräg zur genannten Normalrichtung ausgerichtet ist, beispielsweise in einem Winkel von 45° ± 15° zur Normalrichtung schräggestellt ist.

Durch den erstgenannten Bearbeitungsschritt wird eine Sacklochbohrung erzeugt, deren Tiefe nicht notwendigerweise exakt der Höhe des stabartigen Vorsprungs entspricht. Beispielsweise kann sich die Sacklochbohrung lediglich über einen Teil der Länge des stabartigen Vorsprungs erstrecken. Ebenso sind Ausführungsformen realisierbar, in welchen die Sacklochbohrung etwas über den stabartigen Vorsprung hinaus in den Grundkörper hineinragt. Die Mittelachse der Sacklochbohrung kann unabhängig von deren Länge mit der Mittelachse des stabartigen Vorsprungs, das heißt Zapfens, zusammenfallen.

Mehrere Bohrungen, welche in einem zum Zapfen schrägen Winkel erzeugt werden, werden gemäß verschiedener möglicher Ausgestaltungen von einander diametral gegenüberliegenden Seiten des Zapfens aus eingebracht und münden in die Sacklochbohrung, so dass sie sich in der Sacklochbohrung treffen und damit eine insgesamt in Querrichtung des Zapfens ausgerichtete, jedoch nicht gerade Durchgangsbohrung hergestellt ist. Ist lediglich eine einzige solche Durchgangsbohrung vorhanden, so beschreibt diese zusammen mit der Sacklochbohrung im Längsschnitt des Zapfens eine W-Form.

Gemäß einer möglichen Weiterbildung ist der Zapfen von mehreren hauptsächlich in Zapfenquerrichtung verlaufenden, jeweils einen Knick aufweisenden, das heißt V-förmigen Durchgangsbohrungen durchzogen, welche sich in einem Schnittpunkt, der in der Sacklochbohrung liegt, treffen. Im Fall eines Zapfens mit rechteckigem Querschnitt sind beispielsweise zwei derartige Durchgangsbohrungen, im Fall eines Zapfens mit hexagonalem Querschnitt drei derartige Durchgangsbohrungen vorhanden.

Eine mögliche Verfahrensvariante sieht vor, dass mehrere den stabartigen Vorsprung, das heißt Zapfen, durchziehende Bohrungen generiert werden, indem Laserstrahlung ausschließlich auf die Oberseite des stabartigen Vorsprungs, das heißt auf dessen Stirnfläche, gerichtet wird. Die Oberseite des stabartigen Vorsprungs ist hierbei typischerweise mit der ursprünglichen Werkstückoberfläche, aus welcher, insbesondere durch spanabhebende Bearbeitung, die Zapfen herausgearbeitet werden, identisch.

Laserstrahlen, die nach dieser Verfahrensvariante einen Zapfen stirnseitig treffen, treten aus einer Seitenfläche des Zapfens wieder aus. Dies bedeutet, dass die Laserstrahlung schräg zur Werkstückoberfläche auf das Werkstück, das heißt den Lagerkörper, einstrahlt und im Bereich zwischen den Zapfen, insbesondere in einer der sich kreuzenden Nuten, den Grundkörper des Lagerkörpers trifft, ohne an dieser Stelle eine durchgehende, den Grundkörper durchdringende Öffnung zu erzeugen. Mehrere schräg durch den Zapfen verlaufende, per Laser erzeugte Durchgangsöffnungen, die jeweils einerseits an der Stirnfläche des Zapfens und andererseits an einer Seitenfläche des Zapfens enden, beschreiben zusammen eine nicht gerade, den Zapfen in dessen Querrichtung durchziehende Durchgangsbohrung. Dies gilt sowohl für Varianten, in den zusätzlich zu den schräg verlaufenden Bohrungen eine zentrale Sacklochbohrung durch Laserstrahlung erzeugt wird, als auch für Varianten, in denen keine senkrecht auf die Werkstoffoberfläche treffende Laserstrahlung zum Einsatz kommt, sondern sämtliche Laserstrahlen, die den Zapfen strukturieren, ausschließlich schräg auf die Werkstoffoberfläche gerichtet sind.

Unabhängig von der genauen Querschnittsgeometrie des Zapfens stellen die miteinander verbundenen Löcher, welche sich im Zapfen befinden, Hinterschneidungen dar, welche einen in einem späteren Verfahrensstadium aufzubringenden Gleitbelag formschlüssig verankern.

Der Gleitbelag ist ein nichtmetallischer Gleitbelag und insbesondere aus einem thermoplastischen Kunststoff oder einem faserverstärkten thermoplastischen Kunststoff gebildet. Dabei wird als thermoplastischer Kunststoff insbesondere PTFE oder PEEK eingesetzt. Zur Faserverstärkung des Kunststoffs werden insbesondere Fasern mit einer Faserlänge im Bereich von 50 - 100 µm eingesetzt, vorzugsweise Kohlenstofffasern. Der thermoplastische Kunststoff kann in prinzipiell bekannter Weise auf den Lagerkörper aufgeschmolzen werden.

Ein den Lagerkörper sowie den hierauf befindlichen Gleitbelag umfassendes Gleitlager kann beispielsweise als Großlager für Windkraftanlagen ausgebildet sein. Je nach Geometrie des Lagerkörpers ist dieser beispielsweise zur Aufnahme radialer Lasten oder - insbesondere im Fall eines Schräggleitlagers - zur Aufnahme kombinierter radialer und axialer Lasten vorgesehen. Auch die Gestaltung des Lagerkörpers als Komponente eines Gelenklagers ist prinzipiell möglich.

Der Vorteil der Erfindung liegt insbesondere darin, dass auf zuverlässig reproduzierbare Art, ohne Zwischenschicht, eine innige, auch schwankenden Belastungen standhaltende Verbindung zwischen einem metallischen Grundkörper eines Gleitlagerbauteils und einem nichtmetallischen Gleitbelag herstellbar ist.

Nachfolgend werden mehrere Ausführungsbeispiele der Erfindung anhand einer Zeichnung näher erläutert. Hierin zeigen, teilweise vereinfacht:
- Fig. 1: einen Ausschnitt eines Lagerkörpers für ein Gleitlager in perspektivischer Ansicht,
- Fig. 2: ein Detail der Anordnung nach Fig. 1,
- Fig. 3: eine schematische Schnittdarstellung des Lagerkörpers nach Fig. 1,
- Fig. 4: eine alternative Gestaltung eines Lagerkörpers für ein Gleitlager in schematischer Draufsicht,
- Fig. 5: in einer Darstellung analog Fig. 2 eine weitere Gestaltungsmöglichkeit eines Lagerkörpers für ein Gleitlager,
- Fig. 6: eine schematische Schnittdarstellung des Lagerkörpers nach Fig. 5 in einer Darstellung ähnlich Fig. 3,
- Fig. 7: eine schematische Draufsicht auf einen Zapfen eines weiteren Lagerkörpers für ein Gleitlager,
- Fig. 8: einen Ausschnitt einer alternativen Gestaltung eines Lagerkörpers für ein Gleitlager im Querschnitt in perspektivischer Ansicht,
- Fig. 9: einen Ausschnitt einer weiteren Ausgestaltung eines Lagerkörpers für ein Gleitlager im Querschnitt in perspektivischer Ansicht.

Die folgenden Erläuterungen beziehen sich, soweit nicht anders angegeben, auf sämtliche Ausführungsbeispiele. Einander entsprechende oder prinzipiell gleichwirkende Teile sind in allen Figuren mit den gleichen Bezugszeichen gekennzeichnet.

Ein insgesamt mit dem Bezugszeichen 1 gekennzeichneter metallischer Lagerkörper ist für die Verwendung in einem nicht weiter dargestellten Gleitlager vorgesehen. Der Lagerkörper 1 ist aus einem Grundkörper 2 aus Stahl hergestellt, an dessen Oberfläche sich zahlreiche, in einem regelmäßigen Muster angeordnete stabartige Vorsprünge 3 befinden, die kurz auch als Zapfen bezeichnet werden. Jeder Zapfen 3 weist eine mit 4 bezeichneten Oberseite und mehrere Seitenflächen 5 auf und ist durch Materialabtrag vom Grundkörper 2 erzeugt. Dies bedeutet, dass eine auf die Oberseite 4 der Zapfen 3 gelegte Ebene die Lage der ursprünglichen, unbearbeiteten Oberfläche des Grundkörpers 2 angibt.

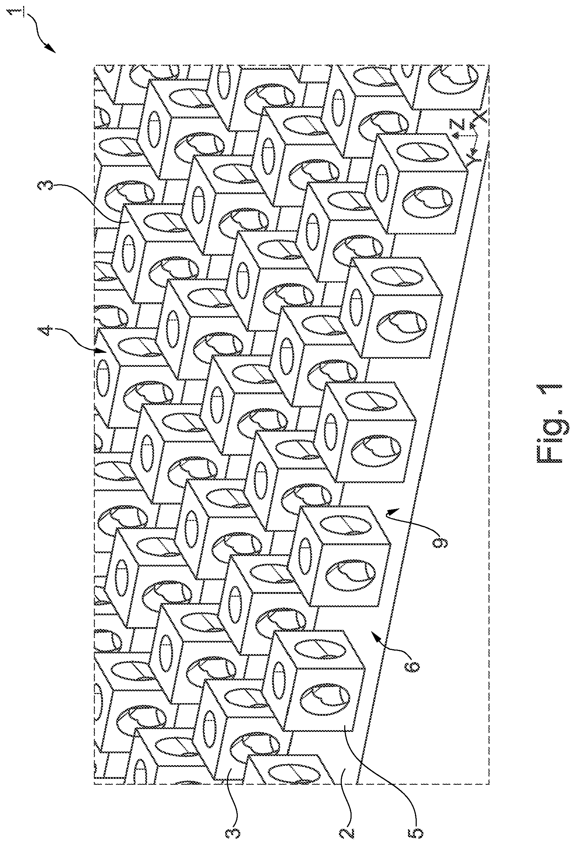

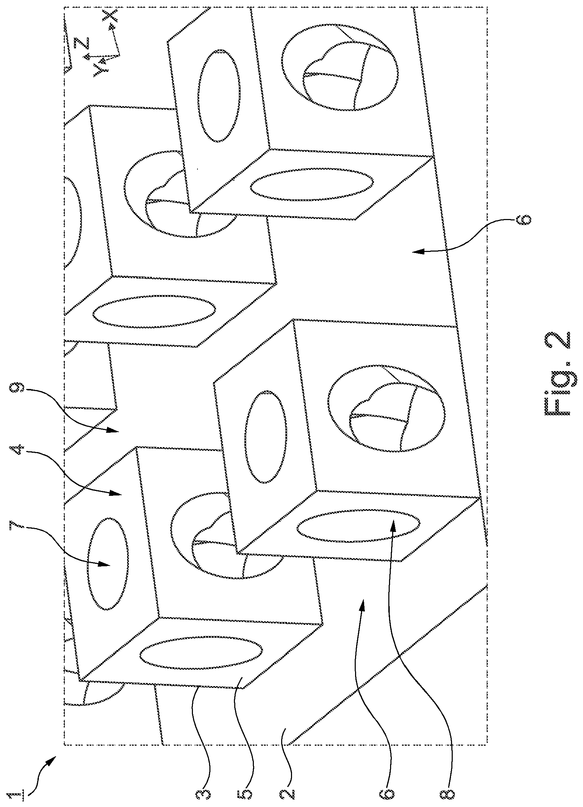

Die Seitenflächen 5 sind zumindest teilweise erzeugbar, indem gerade Nuten 6 durch spanabhebende Bearbeitung in den Grundkörper 2 eingebracht werden. Der Nutgrund ist mit 9 bezeichnet. In den schematischen Figuren 1 bis 7 befinden sich sämtliche Zapfen 3 auf einer gemeinsamen Ebene, der x-y-Ebene. Tatsächlich handelt es sich bei der Oberfläche, auf welcher die Zapfen 3 als integrale Bestandteile des Grundkörpers 2 angeordnet sind, um eine gekrümmte Oberfläche. Dementsprechend existieren Nuten 6, welche als Ringnuten ausgebildet sind. Ebenso sind Ausgestaltungen realisierbar, in welchen die Nuten 6 schraubenförmig, insbesondere an einer zylindrischen Innenumfangsfläche des Grundkörpers 2, gewunden sind.

In jedem Zapfen 3 befindet sich in den Ausführungsformen nach den Figuren 1 bis 6 eine zentrale Sacklochbohrung 7, welche in Längsrichtung LR des Zapfens 3, das heißt in z-Richtung, ausgerichtet ist. Mit QR ist die Querrichtung der Zapfen 3 bezeichnet. Die Sacklochbohrungen 7 sind durch Laserbearbeitung erzeugbar. Alternativ kommt eine spanende Einbringung der Sacklochbohrungen 7 in Betracht. Den Grundkörper 2 durchdringende Bohrungen oder Öffnungen existieren nicht.

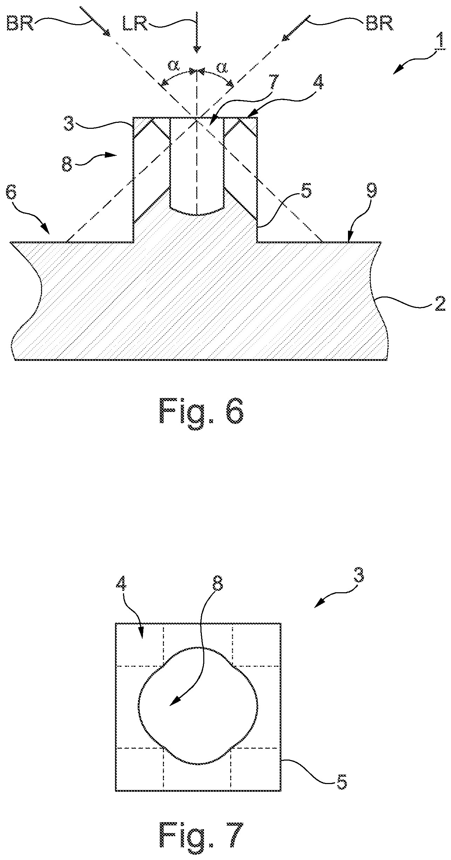

Zusätzlich zu der mittigen Sacklochbohrung 7 weist jeder Zapfen 3 mehrere Durchgangsbohrungen 8 auf. Jede dieser auch im Ausführungsbeispiel nach Fig. 7 vorhandenen Durchgangsbohrungen 8 wird in mehreren Arbeitsschritten erzeugt.

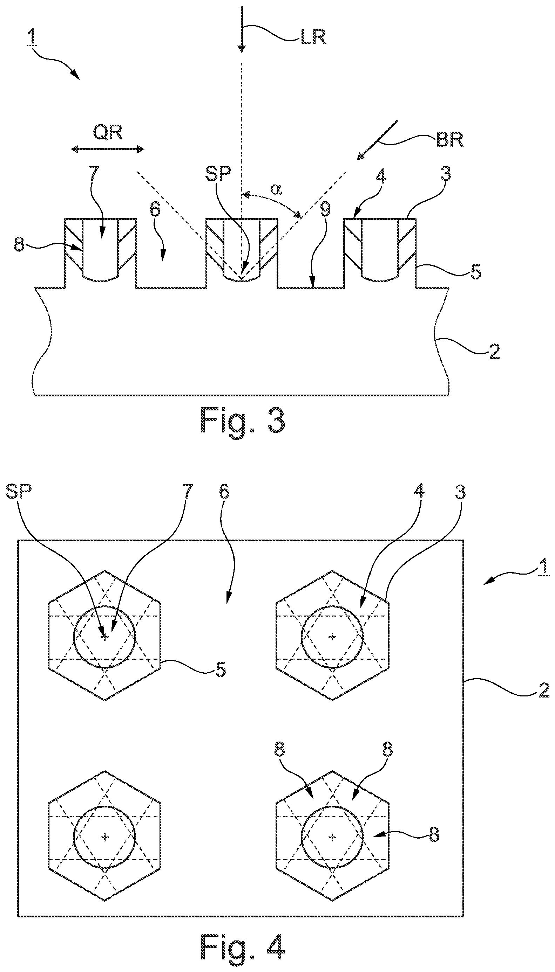

Wie in Fig. 3 veranschaulicht ist, wird zunächst von einer der Seitenflächen 5 aus eine Öffnung erzeugt, welche in der Sacklochbohrung 7 endet. Dieser Vorgang, welcher wiederum in Form einer Laserbearbeitung oder einer spanenden Bearbeitung, alternativ auch durch Erodieren oder Ätzen, ausgeführt werden kann, erfolgt in einer Bearbeitungsrichtung BR, welche mit der Längsrichtung LR einen spitzen Winkel von α von 45° ± 15° einschließt. Der Winkel α ist, abgestimmt auf die Geometrie und Anordnung der Zapfen 3, derart gewählt, dass benachbarte Zapfen 3 nicht störend sind oder in nicht beabsichtigter Weise selbst bearbeitet werden.

Nachdem die erste Seitenfläche 5 auf die beschriebene Weise geöffnet wurde, wird in der diametral gegenüberliegenden Seitenfläche 5 eine entsprechende Öffnung erzeugt, so dass insgesamt die Durchgangsbohrung 8, deren Hauptrichtung der Querrichtung QR entspricht, hergestellt ist. Im Längsschnitt weist die Durchgangsbohrung 8 eine V-Form auf. Mehrere auf die gleiche Art hergestellte Durchgangsbohrungen 8 treffen sich in einem Schnittpunkt SP, der auf der Mittelachse der Sacklochbohrung 7 und damit des gesamten Zapfens 3 liegt.

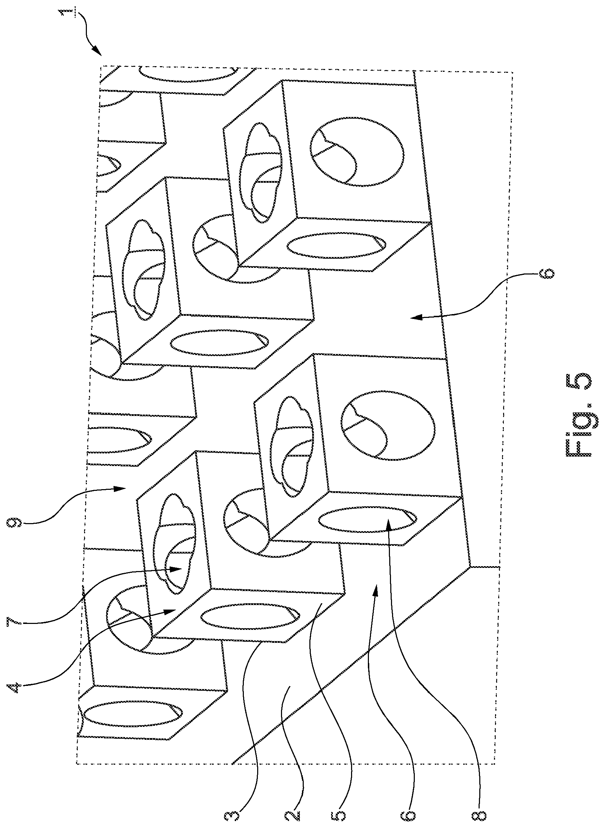

Im Ausführungsbeispiel nach den Figuren 1 bis 3 hat, ebenso wie in den Ausführungsbeispielen nach den Figuren 5 bis 7, jeder Zapfen 3 die Grundform eines Würfels. Demensprechend ist jeder Zapfen 3 von zwei sich in der Draufsicht rechtwinklig kreuzenden Durchgangsbohrungen 8 durchzogen. Abweichend hiervon weist der Lagerkörper 1 nach Fig. 4 Zapfen 3 mit hexagonalem Querschnitt auf, welche jeweils von drei Durchgangsbohrungen 8 durchzogen sind.

Durch Laserstrahlung, welche seitlich auf die Zapfen 3 einstrahlt und in mehreren Schritten die Durchgangsbohrungen 8 erzeugt, sind auch die Zapfen 3 des Lagerkörpers 1 nach Fig. 4 bearbeitbar. Abweichend von diesem Bearbeitungsmodus ist die Laserstrahlung, mit welcher die Zapfen 3 der Lagerkörper 1 nach den Figuren 5 bis 7 bearbeitet werden, ausschließlich auf die Oberseite 4, das heißt die Zapfenstirnfläche, gerichtet. Der Winkel α ist auch in diesen Fällen derart gewählt, dass benachbarte Zapfen 3 bei der Laserbearbeitung nicht in Mitleidenschaft gezogen werden.

In Fig. 6 ist zusätzlich zu einer in Querrichtung QR verlaufenden, durch mehrstufige Bearbeitung erzeugten Durchgangsbohrung 8 eine zentrale Sacklochbohrung 7 erkennbar. Eine solche zentrale, in Normalrichtung zur Oberseite 4 verlaufende Bohrung ist in der Ausführungsform nach Fig. 7 nicht vorhanden. Vielmehr wird in diesem Fall zur Laserbearbeitung ausschließlich Laserstrahlung verwendet, welche schräg zur Substratoberfläche, das heißt zur Oberseite 4, ausgerichtet ist. Sowohl in Fig. 5 als auch in Fig. 7 ist die nicht kreisrunde Querschnittsform der Durchgangsbohrung 8 in der durch die Oberseite 4 gegebenen Ebene erkennbar. Diese Querschnittsform mit vier zu einer geschlossenen Kontur zusammengesetzten Bögen ergibt sich aus der vierfachen Laserbestrahlung der Stirnseite des Zapfens 3.

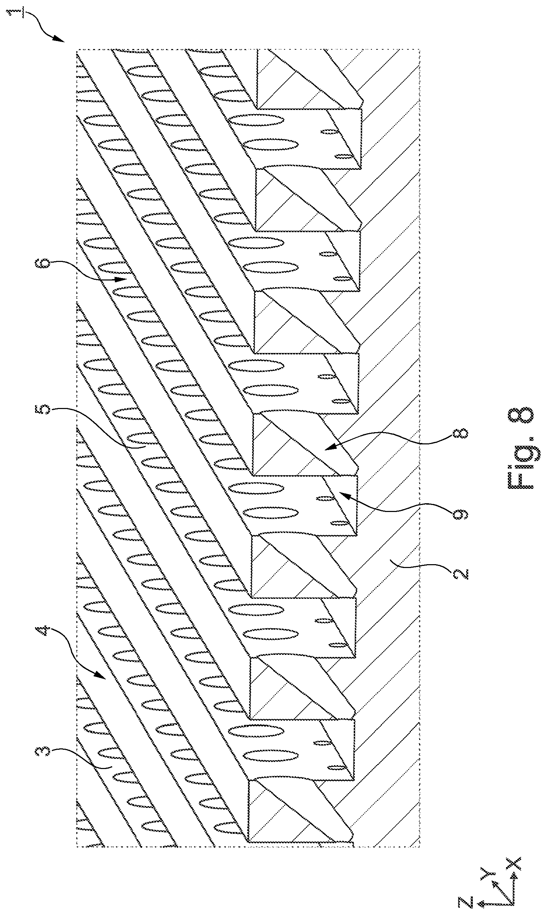

Eine weitere Ausführungsform eines mittels des beschriebenen Verfahrens bearbeiteten Lagerkörpers 1 ist in Fig. 8 dargestellt. Abweichend zu den in Fig. 1 bis Fig. 7 dargestellten Ausführungsvarianten handelt es sich in Fig. 8 nicht um in x- und y- Richtung abschnittsweise ausgebildete Zapfen 3. Vielmehr sind die stabartigen Vorsprünge 3 in x-Richtung abschnittsweise und in y-Richtung fortlaufend ausgebildet. In x-Richtung sind sie durch jeweils eine in y-Richtung verlaufende Nut 6 mit Nutgrund 9 voneinander beabstandet. In gleicher Weise können die stabartigen Vorsprünge 3 in x-Richtung fortlaufend und in y-Richtung abschnittsweise ausgebildet sein und durch je eine in x-Richtung verlaufende Nut 6 mit Nutgrund 9 in y-Richtung beabstandet sein. Ähnlich zu Fig. 7 weisen die stabartigen Vorsprünge 3, welche aus dem Grundkörper 2 in z-Richtung hervorragen, keinerlei erkennbare Aussparung an ihrer Oberseite 4 auf. Lediglich schräg zur Oberseite 4 verlaufende Durchgangsbohrungen 8 durchqueren die stabartigen Vorsprünge 3 derart, dass sie in eine Seitenfläche 5 eintreten und auf einer ihr in x-Richtung gegenüberliegenden Seitenfläche 5 austreten. In Fig. 8 ist dies im Wechsel dargestellt, das heißt die Durchgangsbohrungen 8 treten an den stabartigen Vorsprüngen 3 beidseitig in x-Richtung auf, wobei sich jeweils auf einer Seitenfläche 5 Austrittsöffnung und Eintrittsöffnung entlang der y-Richtung abwechseln. Die Eintrittsöffnung liegt dabei in z-Richtung der Oberseite 4 nahe gelegen, die Austrittsöffnung in z-Richtung dem Grundkörper nahe gelegen. Dabei weist die Eintrittsöffnung einen kleineren Durchmesser als die Austrittsöffnung auf.

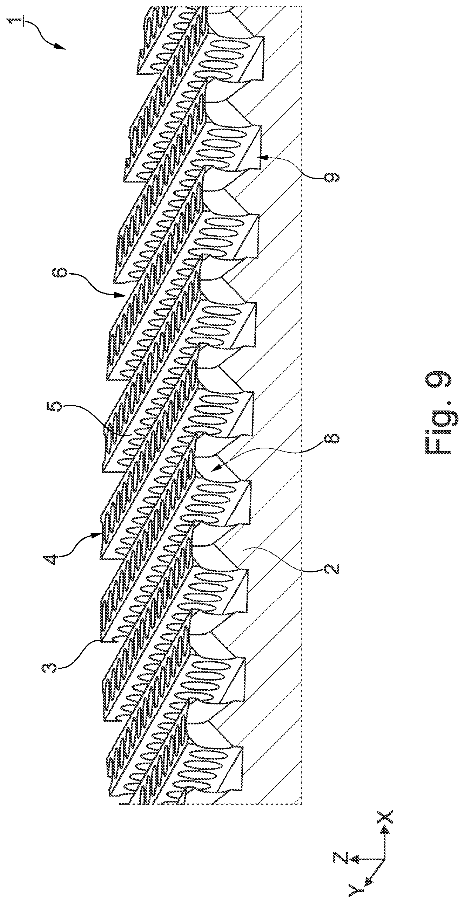

Auch in der in Fig. 9 dargestellten Variante handelt es sich um eine in x-Richtung abschnittsweise und in y- Richtung fortlaufende Ausführung der stabartigen Vorsprünge 3. Sie ragen aus dem Grundkörper 2 in z-Richtung hervor, weisen eine Oberseite 4 und Seitenflächen 5 auf und sind beabstandet durch eine in y-Richtung verlaufende Nut 6 mit Nutgrund 9. In gleicher Weise können die stabartigen Vorsprünge 3 in x-Richtung fortlaufend und in y-Richtung abschnittsweise ausgebildet sein und durch je eine in x-Richtung verlaufende Nut 6 mit Nutgrund 9 in y-Richtung beabstandet sein. Die Bearbeitung der stabartigen Vorsprünge 3 findet in ähnlicher Weise zu den Figuren 5 bis 7 ausgehend von der Oberseite 4, das heißt der Zapfenstirnfläche, statt. Die Bohrung öffnet beim Eintritt die Oberseite 4 der stabartigen Vorsprünge 3 und öffnet beim Austritt eine Seitenfläche 5. Eintrittsöffnung und Austrittsöffnung sind zumindest annähernd kreisförmig und ihre Durchmesser weisen eine ähnliche Größenordnung auf. Eine weitere Bohrung, von der Oberseite 4 ausgehend, lässt eine Austrittsöffnung an der der Seitenfläche 5 in x-Richtung gegenüberliegenden Fläche entstehen. Damit kreuzen sich die Durchgangsbohrungen 8 in den stabartigen Vorsprüngen 3 derart, dass sich im Querschnitt durch die x-z-Ebene durch eine Durchgangsbohrung 8 hindurch eine um 180° gedrehte V-Form des Bohrkanals ergibt.

In allen Fällen sind durch die Bohrungen 7, 8 Hinterschneidungen gebildet, in welchen in einem späteren Verfahrensschritt ein Gleitbelag durch Infiltration formschlüssig verankert wird.

### Bezugszeichenliste

- 1: Lagerkörper
- 2: Grundkörper
- 3: stabartiger Vorsprung, Zapfen
- 4: Oberseite
- 5: Seitenfläche
- 6: Nut
- 7: Sacklochbohrung
- 8: Durchgangsbohrung
- 9: Nutgrund

- α: Winkel
- BR: Bearbeitungsrichtung
- LR: Längsrichtung
- QR: Querrichtung
- SP: Schnittpunkt

## Patentansprüche

1. Verfahren zur Herstellung eines Lagerkörpers (1), wobei zunächst stabartige Vorsprünge (3) an der Oberfläche eines metallischen Grundkörpers (2) hergestellt und durch weitere Bearbeitung zur Verankerung eines Gleitbelags geeignete Formschlusskonturen der Vorsprünge (3) erzeugt werden, **dadurch gekennzeichnet, dass** als Formschlusskonturen die Vorsprünge (3) jeweils in deren Querrichtung (QR) durchziehende Durchgangsbohrungen (8) erzeugt werden.

2. Verfahren nach Anspruch 1, **dadurch gekennzeichnet, dass** die Vorsprünge (3) mittels spanender Bearbeitung des Grundkörpers (2) durch Einbringung sich kreuzender Nuten (6) in die Oberfläche des Grundkörpers (2) hergestellt werden.

3. Verfahren nach Anspruch 1 oder 2, **dadurch gekennzeichnet, dass** Bohrungen (7, 8) in den Vorsprüngen (3) durch Laserbearbeitung erzeugt werden.

4. Verfahren nach Anspruch 3, **dadurch gekennzeichnet, dass** jeder Vorsprung (3) mehrfach per Laser bearbeitet wird, wobei in den verschiedenen Bearbeitungsschritten Laserstrahlung in unterschiedlichen Winkeln auf den Vorsprung (3) gerichtet wird und damit eine nicht gerade Form mindestens einer den Vorsprung (3) durchziehenden Bohrung (8) generiert wird.

5. Verfahren nach Anspruch 4, **dadurch gekennzeichnet, dass** mehrere den Vorsprung (3) durchziehende Bohrungen (8) generiert werden, indem Laserstrahlung ausschließlich auf die Oberseite (4) des Vorsprungs (3) gerichtet wird.

6. Metallischer Lagerkörper (1) für ein Gleitlager, mit einer Vielzahl auf seiner Oberfläche befindlicher, einstückig aus einem Grundkörper (2) des Lagerkörpers (1) gebildeter, zur formschlüssigen Verankerung eines Gleitbelags geeigneter stabartiger Vorsprünge (3), **dadurch gekennzeichnet, dass** die Vorsprünge (3) jeweils mindestens eine in Querrichtung (QR) des Vorsprungs (3) verlaufende Durchgangsbohrung (8) aufweisen.

7. Lagerkörper nach Anspruch 6, **dadurch gekennzeichnet, dass** die Vorsprünge (3) eine in Längsrichtung (LR) des Vorsprungs (3) verlaufende Sacklochbohrung (7) aufweisen, in welche die mindestens eine Durchgangsbohrung (8) mündet.

8. Lagerkörper nach Anspruch 7, **dadurch gekennzeichnet, dass** die Durchgangsbohrung (8) eine geknickte Form aufweist, wobei sich der Knick in der Sacklochbohrung (7) befindet und die Durchgangsbohrung (8) an ihren beiden Enden jeweils schräg zur Längsrichtung (LR) des Vorsprungs (3) ausläuft.

9. Lagerkörper nach Anspruch 8, **dadurch gekennzeichnet, dass** sich eine Mehrzahl an Durchgangsbohrungen (8) in der Sacklochbohrung (7) kreuzen.

10. Lagerkörper nach einem der Ansprüche 6 bis 9, **dadurch gekennzeichnet, dass** die Vorsprünge (3) jeweils eine geometrisch definierte Form mit polygonförmigem Querschnitt haben.

## Claims

1. A method for producing a bearing body (1), wherein rod-like protrusions (3) are first produced on the surface of a metallic main body (2) and form-fitting contours of the protrusions (3) suitable for anchoring a sliding lining are created by further machining, **characterised in that** through-bores (8) that each pass through the protrusions (3) in the transverse direction (QR) thereof are provided as form-fitting contours.

2. The method according to claim 1, **characterised in that** the protrusions (3) are produced by machining the main body (2) by introducing intersecting grooves (6) in the surface of the main body (2).

3. The method according to claim 1 or 2, **characterised in that** bores (7, 8) in the protrusions (3) are produced by laser machining.

4. The method according to claim 3, **characterised in that** each protrusion (3) is processed multiple times by laser, wherein, in the various machining steps, laser radiation is directed at different angles onto the protrusion (3), thereby generating a non-straight shape of at least one bore (8) passing through the protrusion (3).

5. The method according to claim 4, **characterised in that** a plurality of bores (8) passing through the protrusion (3) are generated by laser radiation being directed exclusively at the upper side (4) of the protrusion (3).

6. A metallic bearing body (1) for a sliding bearing, comprising a plurality of rod-like protrusions (3) located on the surface thereof, formed integrally from a main body (2) of the bearing body (1) and suitable for the form-fitting anchoring of a sliding lining, **characterised in that** the protrusions (3) each have at least one through-bore (8) extending in the transverse direction (QR) of the protrusion (3).

7. The bearing body according to claim 6, **characterised in that** the protrusions (3) have a blind hole (7) extending in the longitudinal direction (LR) of the protrusion (3), into which the at least one through-bore (8) opens.

8. The bearing body according to claim 7, **characterised in that** the through-bore (8) has a kinked shape, the kink being located in the blind hole (7) and the through-bore (8) extending obliquely at both ends to the longitudinal direction (LR) of the protrusion (3).

9. The bearing body according to claim 8, **characterised in that** a plurality of through-bores (8) intersect in the blind hole (7).

10. The bearing body according to any one of claims 6 to 9, **characterised in that** the protrusions (3) each have a geometrically defined shape with a polygonal cross-section.

## Revendications

1. Procédé de fabrication d'un corps de palier (1), dans lequel des saillies (3) en forme de tige sont d'abord produites sur la surface d'un corps de base métallique (2) et, par traitement ultérieur, des contours de complémentarité de forme des saillies (3) adaptés à l'ancrage d'une garniture coulissante sont produits, **caractérisé en ce que** des trous traversants (8) s'étendant dans la direction transversale (QR) des saillies (3) sont produits comme contours de complémentarité de forme.

2. Procédé selon la revendication 1, **caractérisé en ce que** les saillies (3) sont produites au moyen d'un usinage par enlèvement de matière du corps de base (2) en créant des rainures croisées (6) dans la surface du corps de base (2).

3. Procédé selon la revendication 1 ou 2, **caractérisé en ce que** des trous (7, 8) dans les saillies (3) sont produits par traitement laser.

4. Procédé selon la revendication 3, **caractérisé en ce que** chaque saillie (3) est traitée plusieurs fois par laser, dans lequel, lors des différentes étapes de traitement, le faisceau laser est dirigé vers la saillie (3) selon différents angles et génère ainsi une forme non rectiligne d'au moins un trou (8) traversant la saillie (3).

5. Procédé selon la revendication 4, **caractérisé en ce que** plusieurs trous (8) traversant la saillie (3) sont générés en dirigeant le faisceau laser exclusivement sur la face supérieure (4) de la saillie (3).

6. Corps de palier (1) métallique pour palier lisse, comportant une pluralité de saillies (3) en forme de tige situées sur sa surface, formées d'une seule pièce à partir d'un corps de base (2) du corps de palier (1), adapté à l'ancrage par complémentarité de forme d'une garniture coulissante, **caractérisé en ce que** chaque saillie (3) comporte au moins un trou traversant (8) s'étendant dans la direction transversale (QR) de la saillie (3).

7. Corps de palier selon la revendication 6, **caractérisé en ce que** les saillies (3) comportent un trou borgne (7) s'étendant dans le sens longitudinal (LR) de la saillie (3), dans lequel débouche au moins un trou traversant (8).

8. Corps de palier selon la revendication 7, **caractérisé en ce que** le trou traversant (8) présente une forme coudée, le coude étant situé dans le trou borgne (7) et le trou traversant (8) s'étendant obliquement à ses deux extrémités dans la direction longitudinale (LR) de la saillie (3).

9. Corps de palier selon la revendication 8, **caractérisé en ce qu'**une pluralité de trous traversants (8) se croisent dans le trou borgne (7).

10. Corps de palier selon l'une des revendications 6 à 9, **caractérisé en ce que** les saillies (3) ont chacune une forme géométriquement définie avec une section transversale polygonale.
